# EUROPEAN PATENT SPECIFICATION

(11) **EP 2 103 987 B1**
(45) Date of publication and mention of the grant of the patent: **21.09.2011**
(21) Application number: 08011149.5
(22) Date of filing: 19.06.2008
(51) Int. Cl.: G02F 1/133, G06F 3/041

(54) **Display panel and method for manutacturing the same**
Anzeigetafel und zugehöriges Herstellungsverfahren
Panneau d'affichage et son procédé de fabrication

(30) Priority: 20.03.2008 KR 20080025937
(43) Date of publication of application: 23.09.2009
(73) Proprietor: Samsung Electronics Co., Ltd., Yeongtong-gu Suwon-city, Gyeonggi-do 442-742 (KR)
(72) Inventor: Choi, Sang-Gun, Gyeonggi-do (KR); Han, Sang-Youn, Chungcheongnam-do (KR); Park, Hyeong-Jun, Chungcheongnam-do (KR)
(74) Representative: Dr. Weitzel & Partner

(56) References cited:
- JP-A- 2007 052 368
- US-A1- 2006 109 222

## Description

### CROSS-REFERENCE TO RELATED APPLICATION

This application claims priority to and the benefit of Korean Patent Application No. 10-2008-0025937 filed in the Korean Intellectual Property Office on March 20, 2008.

### BACKGROUND

### 1. Field of the Invention

The present invention relates to a liquid crystal display panel in which input sensitivity is improved for efficiently detecting the input coordinate values of a touch by a user and a method of manufacturing such a liquid crystal display panel.

### 2. Description of the Related Art

A touch screen panel is an information input means which inputs information when a user touches a screen. The touch screen panel is installed on an image display surface of a display device such as a liquid crystal display (LCD) device, a field emission display (FED) device, a plasma display panel (PDP) device, and an electro luminescence (ELD) device.

The touch screen panel is greatly classified into a capacitive touch screen panel and a resistive touch screen panel. The capacitive touch screen panel has one transparent conductive film or glass for storing electrical charges. When the touch screen panel is touched by, e.g., a stylus, a small amount of charge is drawn to a contact point between the stylus and the transparent conductive film. The amount of charge detected at the contact point is converted into coordinate values. In the resistive touch screen panel, if a user touches a screen in a state that a voltage is applied to two opposite conductive layers, the two conductive layers contact, and a change in voltage or electrical current occurs at the contact point. The change in voltage or electrical current is detected and converted into coordinate values.

In case of the capacitive touch screen panel, electricity should be supplied to a stylus. For this reason, the resistive touch screen panel of an analog input method, which is constructed integrally with an LCD panel, is usually used. The resistive touch screen panel may be formed inside an LCD panel in order to prevent brightness of the LCD panel from being degraded.

In an LCD panel with an integrated touch screen panel, first sensing lines and second sensing lines are formed in a matrix form in a thin film transistor (TFT) array substrate so that a first coordinate value which represents a horizontal contact point and a second coordinate value which represents a vertical contact point can be detected. Also, a touch spacer which contacts the first and second touch sensing lines is formed in a color filter array substrate. In case of a conventional LCD panel with an integrated touch screen panel, there is a problem in that detecting error is frequently caused because the touch sensitivity is low when the touch spacer is contacting the thin film transistor array substrate. And nowadays the touch input motion become more complicated, as techniques such as dragging a point, drawing a line, writing characters and paint some portions of the screen are impelemented.

US2006/0109222 A1 discloses an LCD touch screen having a matrix of touch sensing units, wherein each sensing unit includes a photo sensing unit and a pressure sensing unit. The pressure sensing unit includes a conductive spacer protruding from the common electrode substrate and facing a recessed switch electrode on the TFT substrate. When pressure is exerted on the common electrode substrate, the conductive spacer touches the switch electrode on the TFT substrate and a sensor output signal is output to a sensor data line. Alignment layers (not shown) for aligning the LC layer are coated on the inner surfaces of the panel substrates.

JP2007 052368 A discloses an LCD touch screen having a matrix of touch sensing units. The touch sensing unit includes a conductive spacer protruding from the common electrode substrate and facing a sensing electrode on the TFT substrate. The LC alignment layers are removed from the top surface of the conductive touch spacer and the corresponding area on the sensing electrode.

### SUMMARY

Aspects of the invention provide a liquid crystal display panel in which input sensitivity is improved by making a surface of a sensing electrode concave. Various touch motions can be detected easily with this improved display panel structure. In an exemplary embodiment, the present invention provides a liquid crystal display panel according to appended claim 1.

Preferred embodiments ot the liquid crystal display panel are according to appended claims 2-9.

In another exemplary embodiment, the present invention provides a method of manufacturing a liquid crystal display panel according to appended claim 10.

Preferred methods of manufacturing a liquid crystal display panel are defined in appended claims 11-13.

### BRIEF DESCRIPTION OF THE DRAWINGS

The above and/or other aspects, features and advantages of the present invention will become more apparent from the following detailed description when taken in conjunction with the accompanying drawings, in which:
Fig. 1 is a cross-sectional view schematically illustrating a sensing portion in a display panel helpful to understand the present invention;
Fig. 2 is a plan view of a display panel not according to the present invention;
Fig. 3 is a cross-sectional view taken along line I-I' of Fig. 2;
Fig. 4 is a cross-sectional view taken along line II-II' of Fig. 2;
Fig. 5 is a cross-sectional view illustrating a sensing portion of a display panel not according to the present invention;
Fig. 6 is a cross-sectional view illustrating a sensing portion of a display panel according to an exemplary embodiment of the present invention;
Fig. 7 is a cross-sectional view illustrating a sensing portion of a display panel not according to the present invention.

### DETAILED DESCRIPTION

The invention will now be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "lower" other elements or features would then be oriented "above" or "upper" relative to the other elements or features. Thus, the exemplary term "below' can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be described in detail with reference to the accompanying drawings.

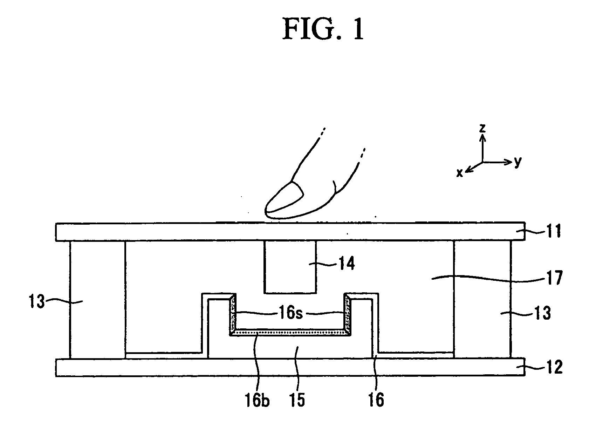

Fig. 1 is a cross-sectional view schematically illustrating a sensing portion in a display panel helpful to understand the present invention.

Referring to Fig. 1, the display panel includes an upper substrate 11, a lower substrate 12, a column spacer 13 and a liquid crystal layer 17 interposed between the upper substrate 11 and the lower substrate 12. On the upper substrate, a touch spacer 14 is located. The touch spacer 14 may have a conductive material, for example, conductive polymer. The touch spacer 14 may be made of several layers such as an ITO (Indium Tin Oxide) layer on an organic spacer or an IZO (Indium Zinc Oxide) layer on an inorganic protrusion, etc. Though Fig. 1 does not show any connected electrical circuit or wiring, the conductive touch spacer 14 is electrically connected to the circuit.

A sensing electrode 16 is formed on the lower substrate 12. The sensing electrode may be a transparent conductive material. The sensing electrode 16 faces the touch spacer 14 on the upper substrate 11. The sensing electrode 16 has a concave upper surface on a well structure 15. The well structure 15 may be formed by a photolithography method using an inorganic or organic material. Though Fig. 1 does not show any connected electrical circuit, the conductive sensing electrode 16 is electrically connected to the circuit.

When a touch action is inputted to the upper substrate 11, the touch spacer 14 contacts the sensing electrode 16 on the lower substrate12. As the sensing electrode 16 has a concave surface, the touch spacer 14 can contact the sensing electrode 16 in a 3-dimensional direction. When the user simply touches the upper substrate 11 to activate a push the button in the display, the touch spacer 14 moves in the z-direction and the touch spacer 14 meets the sensing electrode 16 on the bottom portion of the sensing electrode 16b. But when the user drags some point or draws a picture, the touch event includes an x, y, or z direction or movement, and the touch spacer 14 may move downward in the x, y and z direction. The sensing electrode 16 having a concave surface makes more contact opportunities for the touch spacer. Because the sensing electrode has a concave surface, the touch spacer has more contact points in the x and y direction. The side wall of the sensing electrode 16s may be contacted by the touch spacer 14.

Even if there is no dragging or drawing touch event, for example there is only a z-direction touch inputted into the device, the concave sensing electrode 16 has more contact points like the side wall of the sensing electrode, so the sensitivity of the device may be increased.

When the touch event is inputted, the current or voltage of the sensing electrode 16 changes and the change is communicated to the driving circuit.

Here, the upper substrate 11 and the lower substrate 12 may be made of a transparent material such as glass, PET film, or quartz, etc. The column spacer 13 may be formed from organic material by coating and photolithography. The column spacer 13 may be formed by a ball spacer using a scattering method. The touch spacer 14 has a smaller height than that of the column spacer 13. The well structure 15 may be formed from a SiNx, SiOx or other inorganic material by chemical vapor deposition, sputtering deposition, or evaporation method, etc. For making a well structure as illustrated in Fig. 1 photolithography may be conducted using a slit mask or half tone mask. Although in the Fig. 1 the sensing electrode layer 16 has a concave surface by the lower well structure 15, the sensing electrode 16 may have a well structure by itself having concave surface using a photolithography or metal imprinting, etc.

### <Comparative Example 1>

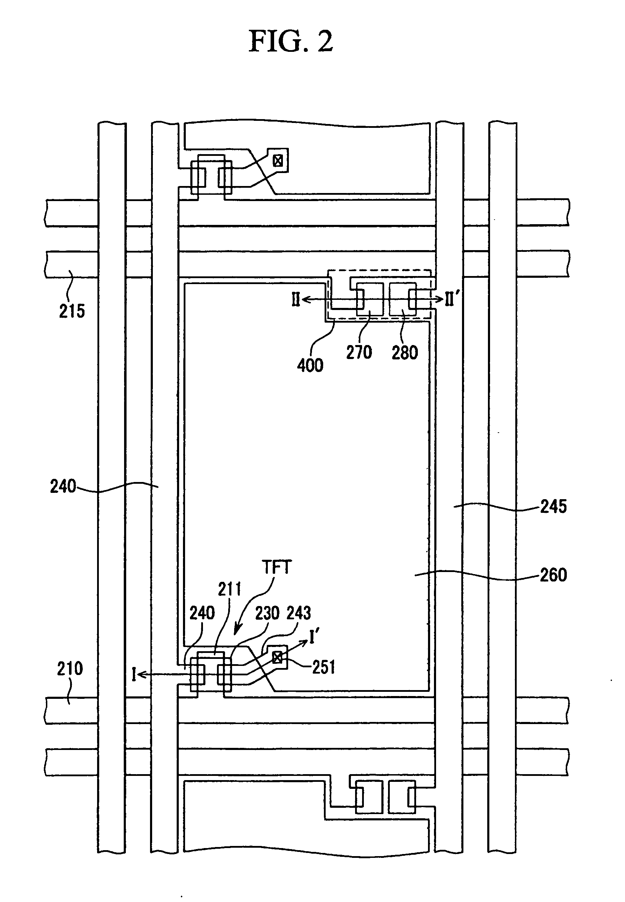

Fig. 2 is a plan view of a display panel not according to the present invention.

The display panel includes a pixel arrayed in a matrix in Fig. 2. The pixel is driven by the thin film transistor (hereinafter TFT) which is electrically connected to a gate line 210 and a data line 240. A pixel electrode 260 is electrically connected to the TFT. A gate electrode 211 which is connected to the gate line 210 has a gate tum on and turn off signal through the gate line 210. A source electrode 241 which is connected to the data line 240 transmits the data signal to a drain electrode 243 which is apart from the source electrode 241. Between the gate electrode 211 and the source electrode241, there is a semiconductor 211. The pixel electrode 260 is electrically connected to the drain electrode 243 through the contact hole 251.

The display panel has a sensing portion 400 for detecting the touch by the user. A first sensing line 215 which is parallel with the gate Iine210 and a second sensing line 245 which is parallel with the data line 245 are located near the pixel electrode 260. A sensing electrode includes a first sensing electrode 270 and a second sensing electrode 280 which are electrically connected to the sensing line 215, 245, respectively. The touch spacer is located opposite the sensing electrodes 270 and 280 as illustrated in Fig. 1. When the user touches the display panel, the touch spacer may contact the sensing electrodes 270 and 280. The changes of the voltage or current of sensing electrode 270, 280 by the touch are transmitted through the first and the second sensing line 215 and 245.

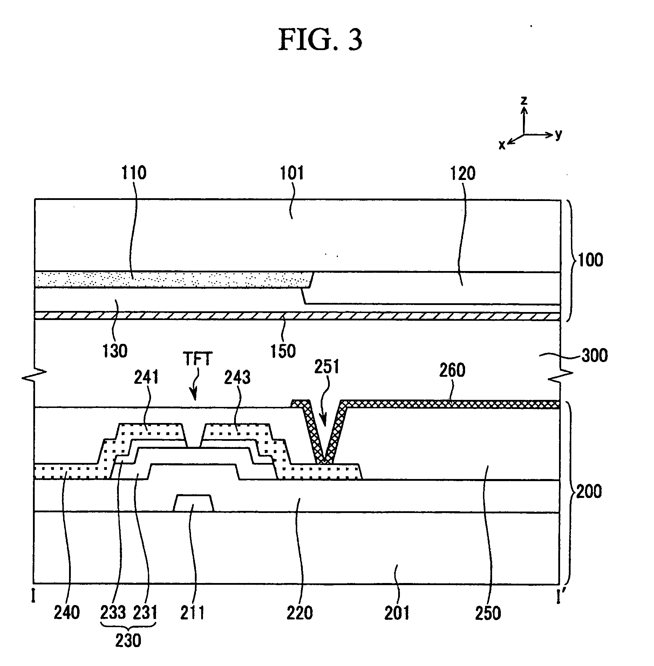

Fig. 3 is a cross-sectional view taken along line I-I' of Fig. 2;

The display panel includes a first substrate 100 and a second substrate 200 with a liquid crystal layer 300 interposed therebetween.

The first substrate 100 includes a black matrix 110 for preventing a light leakage, a color filter layer 120 for realizing a color image, an overcoat layer 130 for mitigating a step difference between the black matrix 110 and the color filter layer 120, and a common electrode 150 for applying a common voltage to the liquid crystal layer, which are sequentially formed on an upper substrate 101. The first substrate 100 may further include an alignment layer (not drawn) on the common electrode 150.

The upper substrate 101 may be made of a transparent insulating material such as plastic so that it can be smoothly pushed when a user touches its surface. The upper substrate 101 may be made of a transparent insulating material such as glass.

The black matrix 110 preventing the light leakage from a back light (not drawn) is formed to overlap a TFT. The black matrix 110 is made of an opaque organic material or an opaque metal.

The color filter layer 120 includes red (R), green (G) and blue (B) color filters to create various colors. The red (R), green (G) and blue (B) color filters create red, green and blue colors by absorbing and transmitting light of a certain wavelength through red, green and blue pigments contained therein, respectively. At this time, various colors can be realized by an additive color mixture of the red (R), green (G) and blue (B) light which pass through the red (R), green (G) and blue (B) color filters.

The overcoat layer 130 is made of a transparent organic material for step coverage and insulation of the common electrode 150. The overcoat layer 130 also serves to protect the color filter layer 120 and the black matrix 110.

The common electrode 150 is formed on the overcoat layer 130. The common electrode 150 is made of a transparent conductive metal such as indium tin oxide (ITO) or indium zinc oxide (IZO). The common electrode 150 forms an electrical field for driving the liquid crystal layer together with a pixel electrode 260 by applying a common voltage to the liquid crystal layer as the pixel electrode 260 applies a pixel voltage to the liquid crystal layer.

The second substrate 200 includes the TFT and the pixel electrode 260 which are formed on a lower substrate 201.

The gate electrode 211 is formed on the lower substrate 201. The gate electrode 211 may have a single-layer structure or a multi-layer structure made of molybdenum (Mo), niobium (Nb), copper (Cu), aluminum (AI), chromium (Cr), silver (Ag), tungsten (W), titanium (Ti) or alloys thereof. The source and drain electrode 241, 243 may have a single-layer structure or a multi-layer structure made of Mo, Nb, Cu, Al, Cr, Ag, titanium (Ti), or other alloys.

The TFT performs a switching operation in response to a gate signal transmitted from the gate line 210 (in Fig. 2) so that a pixel voltage signal of the data line 240 may be charged and maintained in the pixel electrode 260. To this end, the TFT includes the gate electrode 211 extending from the gate line 210 (in Fig. 2), a source electrode 241 extending from the data line 240, and a drain electrode 243 apart from the source electrode 241 and electrically connected to the pixel electrode 260.

The TFT further includes a gate insulating layer 220 and a semiconductor layer 230. The gate insulating layer 220 is formed over the surface of the lower substrate 201 to cover the gate electrode 211. The semiconductor layer 230 is formed on a portion of the gate insulating layer 220 above the gate electrode 211 to form a channel between the source electrode 241 and the drain electrode 243.

The semiconductor layer 230 includes an active layer 231 and an ohmic contact layer 233. The active layer 231 is formed to have a channel between the source and drain electrodes 241 and 243, overlapping the gate electrode 211. The ohmic contact layer 233 is formed on the active layer 231 for ohmic contact with the source and drain electrodes 241 and 243.

The second substrate 200 further includes a passivation film 250 formed over the surface of the lower substrate 201. The passivation film 250 is made of an inorganic insulating material, such as silicon nitride (SiNx) or silicon oxide (SiOx), or an organic insulating material, such as acrylic, polyimide or benzocyclobutene (BCB), etc. The passivation film 250 may have a single-layer structure or a multi-layer structure made of an organic insulating material or/and an inorganic insulating material. The passivation film 250 is formed to cover the TFT and the gate insulating layer 220, thereby insulating the TFT from the pixel electrode 260.

The passivation film 250 has first contact hole 251 which exposes a portion of the drain electrode 243. The first contact hole 251 is formed by etching corresponding portions of the passivation film 250 through a photolithography process.

The pixel electrode 260 is formed on the passivation film 250. The pixel electrode 260 is electrically connected to the drain electrode 243 of the TFT via the first contact hole 251. The pixel electrode 260 is made of a transparent conductive material such as ITO, IZO, indium tin zinc oxide (ITZO), or tin oxide (TO).

The first substrate 200 may further include an alignment layer (not drawn) on the pixel electrode 260.

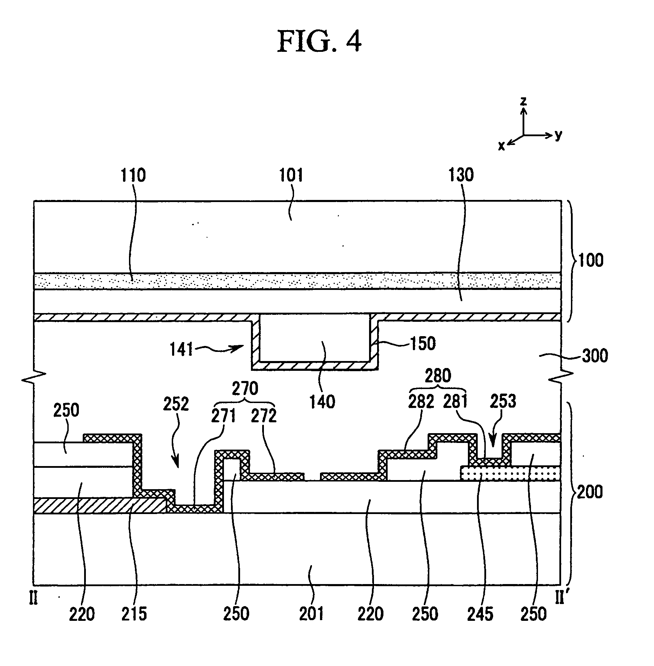

Fig. 4 is a cross-sectional view taken along line II-II' of Fig. 2.

The first substrate 100 includes a touch spacer 141 formed on the overcoat layer 130. A protrusion for touch spacer 140 is formed on the overcoat layer 130 and the protrusion for touch spacer 140 is covered with the common electrode 150. That is, the touch spacer 141 includes the protrusion for touch spacer 140 and the common electrode 150. The touch spacer 141 has a predetermined height, i.e., a convex shape so that the common electrode 150 contacts first and second sensing electrodes 270 and 280 of the second substrate when a surface of the upper substrate 101 is touched by a user's finger or a stylus pen. A predetermined gap is kept between the touch spacer 141 and the first and second sensing electrodes 270 and 280 until a user touches a surface of the upper substrate 101. Also, when a user touches a surface of the upper substrate 101, the touch spacer 141 has the common electrode 150 to contact the first and second sensing electrodes 270 and 280 so that the contact point can be detected. In this example, the height of the touch spacer141 is smaller than that of the column spacer which maintains a cell gap between the first substrate and the second substrate (shown in Fig. 1).

The protrusion for touch spacer 140 may be made of a conductive material so that a voltage or an electrical current can be applied between the common electrode 150 and the first and second sensing electrodes 270 and 280 when the common electrode 150 gets damaged. And moreover the touch spacer 141 may be made of a conductive material itself without the common electrode 150.

The second substrate includes the first sensing line 215, the second sensing line 245 and the first and second sensing electrodes 270 and 280 which are formed on a lower substrate 201.

The first sensing line 215 may be made of the same material in the same layer as the gate line 210 (in Fig. 2). The second sensing line 245 may be made of the same material in the same layer as the data line 240 (in Fig. 2).

The gate insulating layer 220 is formed on the first sensing line 215 and the second sensing line 245 is formed on the gate insulating layer 220. The passivation film 250 is formed over the second sensing line 245.

The passivation film 250 has second and third contact holes 252 and 253 which expose portions of the first and second sensing lines 215 and 245, respectively. The second and third contact holes 252 and 253 are formed by etching corresponding portions of the passivation film 250 through a photolithography process.

The first and second sensing electrode may be formed of the same material of the pixel electrode which is a transparent conductive material. The first sensing electrode 270 includes a first electrode contact portion 271 which electrically contacts the first sensing line 215 and a first electrode extending portion 272 which extends from the first electrode contact portion 271. The second sensing electrode 280 includes a second electrode contact portion 281 which electrically contacts the second sensing line 245 and a second electrode extending portion 282 which extends from the second electrode contact portion 281. The first and second electrode extending portions 272 and 282 may have various shapes. The first and second electrode extending portions 272 and 282 may be alternately formed or symmetrically formed as if they engage each other.

The first electrode contact portion 271 of the first sensing electrode 270 is electrically connected to the first sensing line 215 via the second contact hole 252 which penetrates the passivation film 250 and the gate insulating layer 220. In Fig. 4 the second contact hole 252 exposes the second substrate 201 and the second contact hole 252 may expose some portion of the first sensing electrode 215.. The first electrode extending portion 272 of the first sensing electrode 270 is formed on the passivation film 250 in a predetermined pattern to face the second sensing electrode 280.

The second electrode contact portion 281 of the second sensing electrode 280 is electrically connected to the second sensing line 245 via the third contact hole 253 which penetrates the passivation film 250. The second electrode extending portion 282 of the second sensing electrode 280 is formed on the passivation film 250 in a predetermined pattern to face the first sensing electrode 270. Here, the second electrode extending portion 282 may be formed on the passivation film 250 at the same height as the first electrode extending portion 272 of the first sensing electrode 270. Therefore, when the panel is touched, the touch spacer 141 equally contacts the first and second sensing electrodes 270 and 280.

The first and second sensing electrodes 270 and 280 form a concave surface, i.e. the first and second electrode extending portions 272 and 282 together form a concave surface facing the touch spacer 141 as shown in Fig. 4. A patterned passivation film makes up the upper part of the first and second electrode extending portion 272 and 282, which are located in the edge of the first and second electrode extending portion 272 and 282. An exposed gate insulating layer makes up a lower part of the first and second electrode extending portion 272 and 282, which is located inward toward the middle portion of the touch point.

For this concave surface of the sensing electrode, the passivation film and the gate insulating layer can make a concave surface like a well for sensing electrodes 270 and 280.

If the display panel is touched by a user, the touch spacer 141 may contact the concave surface of the sensing electrode, i.e. the first and second electrode extending portion 272 and 282. Because the surface of the sensing electrode is concave, the touch spacer has more of a chance to contact the sensing electrodes 270 and 280 through a bottom surface and a side wall surface of the touch spacer. The more chances to make contact between the touch spacer and the sensing electrode allows for better sensitivity of the display panel.

When a user drags some point or draws a picture, the touch event comprises an x, y, or z direction movement, so the touch spacer 141 may move downward in the x, y and z direction. The sensing electrodes 270 and 280 having a concave surface create more contact opportunities for the touch spacer 141. Because the sensing electrodes 270 and 280 have a concave surface, the touch spacer 141 has more contact points in the x and y direction. The side wall of the sensing electrodes 270 and 280 may be contacted by the touch spacer 141.

When the upper substrate 101 is touched by a user's finger or a stylus pen, the first and second sensing electrodes 270 and 280 are contacted through the touch spacer 141, so that a resistance value varies depending on a contact position. Since an electrical current or voltage depends on the varied resistance value, the detected electrical current or voltage is outputted as a horizontal coordinate signal through the first sensing line 215 and as a vertical coordinate signal through the second sensing line 245. The outputted coordinate signals are converted into coordinate values by a driving circuit, so that a command or an application program corresponding to the measured coordinate values is executed.

### <Comparative Example 2>

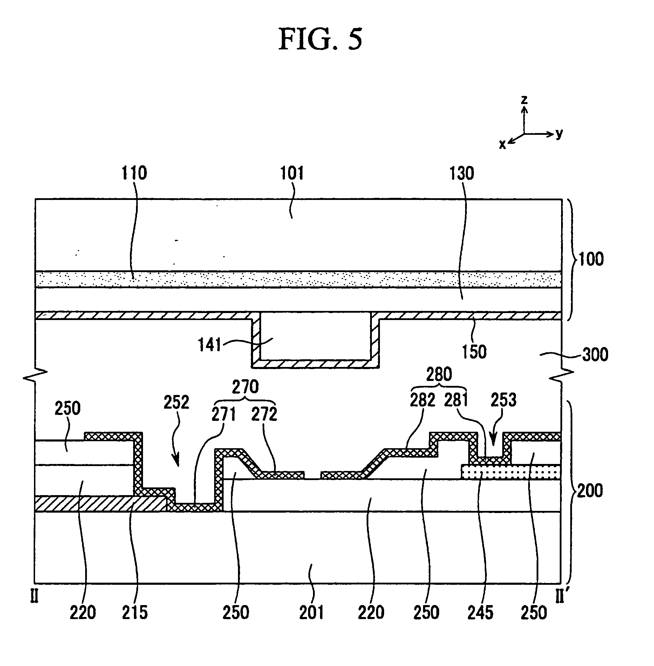

Fig. 5 is a cross-sectional view illustrating a sensing portion of a display panel not according to the present invention; Here, for convenience of explanation, those members that have the same functions and that are described in Figs. 2 to 4 are indicated by the same reference numerals and the description thereof is omitted.

Referring to the Fig. 5, the first and second electrode extending portions 272 and 282 have an inclined portion facing touch spacer 141 on the upper substrate. Side walls of the concave the sensing electrodes 270 and 280 facing touch spacer 141 are sloped. The passivation film 250 has an inclined surface so that the sensing electrodes 270 and 280 can have a slope. The inclined side wall of the sensing electrode may face the edge of the touch spacer 141, so the touch spacer's edge can safely contact sensing electrodes 270 and 280.

For the inclined surface of the passivation film, the passivation film may be dry etched. If the passivation film is made of an organic photo sensitive material, a slit photo mask or half tone mask may be used in a photolithography method.

### <Embodiment>

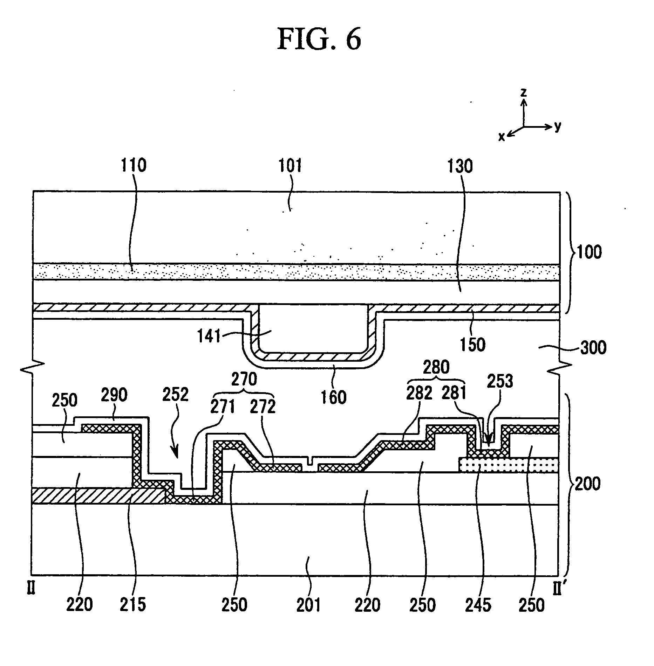

Fig. 6 is a cross-sectional view illustrating a sensing portion of a display panel according to an exemplary embodiment of the present invention.

The following explanation describes an embodiment of the present invention. Here, for convenience of explanation, those members that have the same functions and that are described in Figs. 2 to 4 are indicated by the same reference numerals and the description thereof is omitted.

Referring to Fig. 6, the display panel includes an alignment layer in the first substrate and the second substrate. The alignment layer 290 is formed on the sensing electrodes 270 and 280 and the alignment layer 160 is formed on the touch spacer 141. The alignment layers 160 and 290 in this embodiment of the invention are the uppermost layer in the first and second substrate to prevent disorientation of the liquid crystal molecules. The alignment layers may be made of an inorganic material or organic material.

The alignment layer 160 on the touch spacer has a thinner portion than the other portion of the alignment layer 160. On the upper portion of the touch spacer, the alignment layer has a thinner thickness. The alignment layer 160 on the touch spacer becomes thinner as the alignment layer 160 is closer to the second substrate. It is better to transmit the current or voltage of the touch spacer 141, the common voltage of the common electrode, to the sensing electrodes 270 and 280. Because the function of the alignment layer is insulation from electricity therebetween, the thinner thickness of the alignment layer at the contact point makes allows for better sensitivity and better detecting efficiency for the touch event (the better transmission of the electricity).

In Fig. 6, the sensing electrode also has a concave surface in the sensing electrodes 270 and 280. The thinner alignment layer 160 on the touch spacer can meet the curved surface of the sensing electrodes 270 and 280.

### <Comparative Example 3>

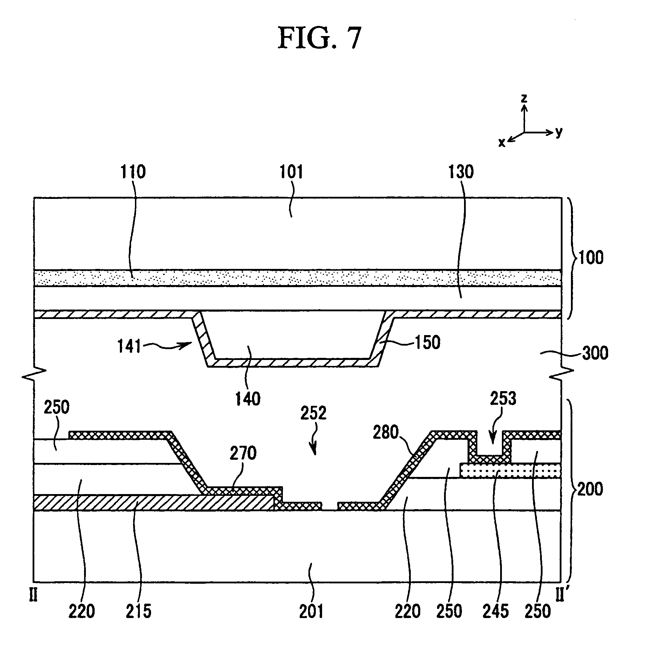

Fig. 7 is a cross-sectional view illustrating a sensing portion of a display panel not according to the present invention. Here, for convenience of explanation, those members that have the same functions and that are described in Figs. 2 and 3 are indicated by the same reference numerals and the description thereof is omitted.

Referring to Fig. 7, the first substrate 100 is similar to that of Fig. 4. So the explanation about the first substrate is omitted. The second substrate 200 includes the first sensing line 215, the second sensing line 245 and the first and second sensing electrodes 270 and 280 which are formed on a lower substrate 201.

The first sensing line 215 may be made of the same material in the same layer as the gate line 210 (in Fig. 2). The second sensing line 245 may be made of the same material in the same layer as the data line 240 (in Fig. 2).

The gate insulating layer 220 is formed on the first sensing line 215 and the second sensing line 245 is formed on the gate insulating layer 220. The passivation film 250 is formed over the second sensing line 245.

The passivation film 250 has second and third contact holes 252 and 253 which expose portions of the first and second sensing lines 215 and 245, respectively. The second contact holes 252 are formed by etching corresponding portions of the passivation film 250 and the gate insulating layer 220 through a photolithography process, and the third contact holes 253 are formed by etching corresponding portions of the passivation film 250 through a photolithography process.

The first and second sensing electrodes 270 and 280 may be formed of the same material of the pixel electrode which is transparent conductive material on the passivation film. And the first sensing electrode 270 faces the second sensing electrode 280. The first sensing electrode electrically contacts the first sensing line 215 through the second contact hole 252. The side wall of the second contact hole may slope, which is formed by the photolithography method. The passivation film may be made of an organic material or an inorganic material.

The sloped side wall of the second contact hole 252 are inclined so that the sensing electrodes 270 and 280 have a concave surface facing the touch spacer 141 as shown in Fig. 7. The sensing electrodes 270 and 280 may have an inward curve in middle.

The second sensing electrode 280 electrically contacts the second sensing line 245 through the third contact hole 253. The first and second electrodes 270 and 280 may have various shapes. Portions of the first and second electrodes 270 and 280 may be alternately formed or symmetrically formed as if they engage each other.

If the display panel is touched by user, the touch spacer 141 may contact the concave surface of the sensing electrode, i.e. the first and second electrodes 270 and 280. Because the surface of the sensing electrode is concave, the touch spacer has more of a chance to contact the sensing electrodes 270 and 280 through a bottom surface and a side wall surface of the touch spacer. Sensitivity of the display panel is increased by providing more chances to make contact between the touch spacer 141 and the sensing electrodes 270 and 280.

When a user drags some point or draws a picture, the touch event comprises an x, y, or z direction movement, so the touch spacer 141 may move downward in the x, y and z direction. The sensing electrodes 270 and 280 having a concave surface make more contact opportunity for the touch spacer 141. Because the sensing electrodes 270 and 280 havee a concave surface, the touch spacer 141 has more contact points in the x and y direction. The side wall of the sensing electrodes 270 and 280 may be contacted by the touch spacer 141.

### <Manufacturing method>

A method of manufacturing a liquid crystal display panel according to an exemplary embodiment of the present invention is described below.

The method for manufacturing a display panel according to an exemplary embodiment of the present invention includes forming a first substrate (i.e., color filter array substrate) and forming a second substrate (i.e., TFT array substrate).

As shown in Fig. 3, a black matrix 110 is formed on an upper substrate 101.

The black matrix 110 is formed such that an opaque organic material layer or an opaque metal layer is deposited on the upper substrate 101 and is patterned by a photolithography process and an etching process. The black matrix 110 is formed at a predetermined width to prevent opaque metal patterns of the second substrate from being seen. The upper substrate 101 is made of a transparent insulating material such as plastic so that it can be smoothly pushed when its surface is touched.

A color filter layer 120 is formed on the upper substrate 101 having the black matrix 110 as shown in Fig. 3. The color filter layer 120 is formed such that red (R), green (G) and blue (B) color filters are formed by a photolithography method. The color filters may be formed by an ink jet method.

Next, as shown in Fig. 3, an overcoat layer 130 is formed over the whole surface of the upper substrate 101 to cover the black matrix 110 and the color filter layer 120.

The overcoat layer 130 is formed at a predetermined thickness to protect the color filter layer 120 and to obtain excellent step coverage when a common electrode 150 is formed. The overcoat layer 130 may be formed by depositing acrylic resin using, for example, a spin coating technique.

Then, as shown in Fig. 4, a touch spacer 141 is formed on the overcoat layer 130 by using an organic material or an inorganic material.

In order to form the touch spacer 141, an organic layer is deposited over the whole surface of the upper substrate 101. A photoresist is coated on the organic layer and is subjected to a light exposure process and a development process of a photolithography process to thereby form a photoresist pattern. The organic layer is patterned by an etching process using the photoresist pattern as a mask, thereby forming a protrusion for the touch spacer 140. The organic layer may be formed using a photosensitive organic layer without a photoresist. The organic layer may be formed by using an inkjet printing method. The touch spacer 141 may be made in various forms.

Subsequently, as shown in Fig. 4, the common electrode 150 is formed over the whole surface of the upper substrate 101 to cover the overcoat layer 130 and the protrusion for touch spacer 140.

In more detail, a transparent conductive material layer is deposited over the whole surface of the upper substrate 101 to cover the overcoat layer 130 and the protrusion for touch spacer 140 by using, for example, a sputtering technique. The transparent conductive material layer is made of a transparent conductive material such as ITO or IZO. The transparent conductive material layer may be patterned into the common electrode 150 by a photolithography process and an etching process using a mask.

Next, as shown in Fig. 6, an alignment layer is formed on the common electrode 150. The alignment layer may be made of an inorganic material or an organic material. If an organic material is used, the alignment layer can be formed using a roll coating printing method, a spin coating method, an ink jet printing method, etc. When the alignment layer is formed by a coating method, a coated organic material is flown down through the slopes of the substrate and the upper portion of the touch spacer 141 have the thinner thickness of the alignment layer.

The steps of forming the second substrate are described below in detail with reference to Figs. 2 to 4.

Agate metal pattern having a gate line 210, a gate electrode 211 and a first sensing line 215 is formed on a lower substrate 201. The gate metal pattern is formed such that a gate metal layer is deposited by a deposition technique such as a sputtering technique and is then patterned by a photolithography process and an etching process. The lower substrate 210 is made of a transparent insulating material such as glass or plastic.

The gate line 210 is formed in a first direction, and the gate electrode 211 extends from the gate line 210. The first sensing line 215 is formed in the first direction parallel with the gate line 210. The first sensing line 215 is apart from the gate line 210. For example, the first sensing line 215 is at a distance of about 5 µm from the gate line 210.

Then, as shown in Figs. 3 and 4, a gate insulating layer 220 is formed over the whole surface of the lower substrate 201 having the gate metal pattern by using a plasma enhanced chemical vapor deposition (PECVD) technique. The gate insulating layer 220 is formed by depositing an insulating material such as silicon nitride (SiNx) or silicon oxide (SiOx) over the whole surface of the lower substrate 201. The gate insulating layer 220 is formed to cover the gate metal pattern formed on the lower substrate 201, thereby electrically insulating the gate metal pattern.

As shown in Fig. 3, a semiconductor layer 230 includes an active layer 231. An ohmic contact layer 233 is formed on a portion of the gate insulating layer 220 over the gate electrode 211. The active layer 231 is formed such that a poly-silicon layer or an amorphous silicon layer is deposited and patterned by a photolithography process and an etching process, and the ohmic contact layer 233 is formed such that a doped poly-silicon layer or a doped amorphous silicon layer is deposited and patterned by a photolithography process and an etching process.

Subsequently, as shown in Figs. 2 to 4, a data metal pattern having a data line 240, a source electrode 241, a drain electrode 243, and a second sensing line 245 is formed on the lower substrate 201 having the semiconductor layer 230.

In more detail, the data metal pattern is formed such that a metal layer is deposited on the lower substrate 201 having the semiconductor layer 230 and patterned by a photolithography process and an etching process.

The data line 240 is formed to cross the gate line 210. One side of the drain electrode 243 faces the source electrode 241, and the other side is electrically connected to the pixel electrode 260 to have a wider area on one side.

As shown in Figs. 2 to 4, a passivation film 150 is formed over the whole surface of the lower substrate 201. First to third contact holes 251 to 253 are formed in the passivation film 250.

The passivation film 250 is formed over the whole surface of the lower substrate 201 by using a deposition technique such as a PECVD technique or a spin coating technique. The first and third contact holes 251 and 253 are formed by a photolithography process and an etching process using a mask to penetrate the passivation film 250. At the same time, the second contact hole is formed to penetrate the passivation film 250 and the gate insulating layer 220. The first contact hole 251 exposes a portion of the drain electrode 243. The third contact hole 253 exposes a portion of the second sensing line 245, and the second contact hole 252 exposes a portion of the first sensing line 215. The passivation film 250 may be formed of an inorganic insulating material such as silicon nitride (SiNx) or silicon oxide (SiOx) or an organic insulating material such as acrylic, polyimide or benzocyclobutene (BCB).

Thereafter, as shown in Figs. 2 to 4, a pixel electrode 260 and first and second sensing electrodes 270 and 280 are formed on the passivation film 250.

More specifically, a transparent conductive material layer such as ITO, IZO or TO is deposited on the passivation film 250 by using a deposition technique such as a sputtering technique and then patterned by a photolithograph process and an etching process using a mask, thereby forming the pixel electrode 260 in a pixel region.

The first and second sensing electrodes 270 and 280 may be formed on the passivation film 250 at the same height as in Fig. 4. The first and second sensing electrodes 270 and 280 are electrically connected to the first and second sensing lines 215 and 245 via the second and third contact holes 252 and 253, respectively. The first sensing electrode 270 is electrically connected to the first sensing line 215 via the second contact hole 252 and a portion of the first sensing electrode 270 is extended toward the second contact electrode 280. The second sensing electrode 280 is electrically connected to the second sensing line 245 via the third contact hole 253 and a portion of the second sensing electrode 280 is extended toward the first sensing electrode 270.

Next, as shown in Fig. 6, an alignment layer 290 is formed on the sensing electrodes 270 and 280. The alignment layer may be made of an inorganic material or organic material. If an organic material is used, the alignment layer is formed using a roll coating printing method, a spin coating method, an ink jet printing method, etc.

Next, the first substrate 100 and the second substrate 200 are attached and a liquid crystal 300 is interposed. The liquid crystal may be dropped on the first substrate or the second substrate by one drop filing method and then the two substrates may be attached.

## Claims

1. A liquid crystal display panel comprising;
a first substrate (200) including a sensing electrode (16; 270, 280);
a second substrate (100) opposite the first substrate (200) including a touch spacer (14; 141);
a column spacer (13) supporting the first and second substrate (200; 100); and
a liquid crystal layer (17; 300) interposed between the first and second substrate (200; 100);
wherein the sensing electrode (16; 270, 280) facing the touch spacer (14; 141) has a concave surface;
the first substrate (200) including as the uppermost layer a first liquid crystal alignment layer (290) covering the sensing electrode (16; 270, 280); and
the second substrate (100) including as the uppermost layer a second liquid crystal alignment layer (160) covering the touch spacer (14; 141);
**characterized in that** the portion of the second liquid crystal alignment layer (160) on the top of the touch spacer (14; 141) has a thinner thickness than the remaining portion of the second liquid crystal alignment layer (160).

2. The liquid crystal display panel of claim 1, wherein the touch spacer (14; 141) has a conductive material.

3. The liquid crystal display panel of claim 2, wherein the touch spacer (14; 141) has a transparent conductive material.

4. The liquid crystal display panel of one of the claims 1 to 3 wherein a side wall of the sensing electrodes (16; 270, 280) slopes.

5. The liquid crystal display panel of one of the claims 1 to 3,
wherein the first substrate (200) includes a thin film transistor (TFT) for driving a pixel: and
wherein the second substrate (100) includes a black matrix layer (110).

6. The liquid crystal display panel of claim 5, wherein the thin film transistor (TFT) includes;
a gate electrode (211);
a gate insulating layer (220) on the gate electrode (211);
an active layer (231) on the gate insulating layer (220);
an ohmic contact layer (233) on the active layer (231);
a source and drain electrode (241, 243) on the ohmic contact layer (233);
a passivation film (250) having a contact hole (251); and
a pixel electrode (260) contacting the drain electrode (243) through the contact hole (251), wherein the pixel electrode (260) and the sensing electrode (16; 270, 280) are made of substantially the same material as the same layer.

7. The liquid crystal display panel of claim 6, wherein the passivation film (250) has a concave surface under the sensing electrode (16; 270, 280),

8. The liquid crystal display panel of claim 7, further comprises a first sensing line (215) and a second sensing line (245) electrically connected to the sensing electrode (16; 270, 280).

9. The liquid crystal display panel of claim 8, at least one of first sensing line (215), the second sensing line (245), the gate insulating layer (220) or passivation film (250) makes the concave surface for the sensing electrode (16; 270, 280).

10. A method of manufacturing a liquid crystal display panel comprising:
forming a first substrate (100) including the step of forming a touch spacer (14; 141) on a substrate (101);
forming a second substrate (200) including the step of forming a sensing electrode (16; 270, 280) on another substrate (201) wherein the sensing electrode (16; 270, 280) is formed so as to have a conclave surface;
assembling the first and second substrate (100, 200) including the step of forming a column spacer (13) supporting the first and second substrate (100; 200) so that the sensing electrode (16, 270, 280) faces the touch spacer (14, 141); and
interposing a liquid crystal layer (17; 300) between the first and second substrate (100; 200);
wherein forming the first substrate (100) includes the step of forming a first liquid crystal alignment layer (290) as the uppermost layer of the first substrate (100) covering the sensing electrode (16; 270, 280);
wherein forming the second substrate (200) includes the step of forming a second liquid crystal alignment layer (160) as the uppermost layer of the second substrate (200) covering the touch spacer (14; 141);
**characterized in that** the portion of the second liquid crystal alignment layer (160) on the top of the touch spacer (14; 141) has a thinner thickness than the remaining portion of the second liquid crystal alignment layer (160).

11. The method of claim 10, wherein the touch spacer (14; 141) has a conductive material.

12. The method of claim 11, wherein the touch spacer (14; 141) has a transparent conductive material,

13. The method of claim 10, wherein a side wall of the sensing electrode (16; 270, 280) slopes.

## Patentansprüche

1. Flüssigkristallanzeigefeld, umfassend:
ein erstes Substrat (200), das eine Abtastelektrode (16; 270, 280) aufweist;
ein zweites Substrat (100), das dem ersten Substrat (200) gegenüberliegt und einen Berührungsabstandshalter (14; 141) aufweist;
einen Säulenabstandshalter (13), der das erste und zweite Substrat (200; 100) trägt; und
ein Flüssigkristallschicht (17; 300), die zwischen das erste und zweite Substrat (200; 100) eingefügt ist;
wobei die Abtastelektrode (16; 270, 280), die dem
Berührungsabstandshalter (14; 141) gegenüberliegt, eine konkave Oberfläche aufweist;
das erste Substrat (200) als oberste Schicht eine erste Flüssigkristallausrichtungsschicht (290) aufweist, welche die Abtastelektrode (16; 270, 280) bedeckt; und
das zweite Substrat (100) als oberste Schicht eine zweite Flüssigkristallausrichtungsschicht (160) aufweist, welche den Berührungsabstandshalter (14; 141) bedeckt;
**dadurch gekennzeichnet, dass** der Abschnitt der zweiten Flüssigkristallausrichtungsschicht (160) auf der Oberseite des Berührungsabstandshalters (14; 141) eine dünnere Dicke als der restliche Abschnitt der zweiten Flüssigkristallausrichtungsschicht (160) aufweist.

2. Flüssigkristallanzeigefeld nach Anspruch 1, wobei der Berührungsabstandshalter (14; 141) ein leitendes Material aufweist.

3. Flüssigkristallanzeigefeld nach Anspruch 2, wobei der Berührungsabstandshalter (14; 141) ein transparentes leitendes Material aufweist.

4. Flüssigkristallanzeigefeld nach einem der Ansprüche 1 bis 3, wobei sich eine Seitenwand der Abtastelektrode (16; 270, 280) neigt.

5. Flüssigkristallanzeigefeld nach einem der Ansprüche 1 bis 3,
wobei das erste Substrat (200) einen Dünnschichttransistor (TFT) zum Ansteuern eines Pixels aufweist; und
wobei das zweite Substrat (100) eine schwarze Matrixschicht (110) aufweist.

6. Flüssigkristallanzeigefeld nach Anspruch 5, wobei der Dünnschichttransistor (TFT) aufweist:
eine Gate-Elektrode (211);
eine Gate-Isolierschicht (220) auf der Gate-Elektrode (211);
eine aktive Schicht (231) auf der Gate-Isolierschicht (220);
eine ohmsche Kontaktschicht (233) auf der aktiven Schicht (231);
eine Source- und Drain-Elektrode (241, 243) auf der ohmschen Kontaktschicht (233);
eine Passivierungsschicht (250) mit einem Kontaktloch (251); und
eine Pixelelektrode (260), die durch das Kontaktloch (251) mit der Drain-Elektrode (243) in Kontakt steht, wobei die Pixelelektrode (260) und die Abtastelektrode (16; 270, 280) im Wesentlichen aus dem gleichen Material wie die gleiche Schicht hergestellt sind.

7. Flüssigkristallanzeigefeld nach Anspruch 6, wobei die Passivierungsschicht (250) eine konkave Oberfläche unter der Abtastelektrode (16; 270, 280) aufweist.

8. Flüssigkristallanzeigefeld nach Anspruch 7, umfasst ferner eine erste Abtastleitung (215) und eine zweite Abtastleitung (245), die elektrisch mit der Abtastelektrode (16; 270, 280) verbunden sind.

9. Flüssigkristallanzeigefeld nach Anspruch 8, wobei mindestens eine der ersten Abtastleitung (215), der zweiten Abtastleitung (245), der Gate-Isolierschicht (220) oder der Passivierungsschicht (250) die konkave Oberfläche für die Abtastelektrode (16; 270, 280) bildet.

10. Verfahren zur Herstellung eines Flüssigkristallanzeigefeldes, umfassend:
Bilden eines ersten Substrats (100), umfassend den Schritt des Bildens eines Berührungsabstandshalters (14; 141) auf einem Substrat (101);
Bilden eines zweiten Substrats (200), umfassend den Schritt des Bildens einer Abtastelektrode (16; 270, 280) auf einem anderen Substrat (201);
wobei die Abtastelektrode (16; 270, 280) so ausgebildet wird, dass sie eine konkave Oberfläche aufweist;
Zusammenfügen des ersten und zweiten Substrats (100; 200), umfassend den Schritt des Bildens eines Säulenabstandshalters (13), der das erste und zweite Substrat (100; 200) trägt, so dass die Abtastelektrode (16; 270, 280) dem Berührungsabstandshalter (14; 141) gegenüberliegt; und Einfügen einer Flüssigkristallschicht (17; 300) zwischen das erste und zweite Substrat (100; 200);
wobei das Bilden des ersten Substrats (100) den Schritt des Bildens einer ersten Flüssigkristallausrichtungsschicht (290) als oberste Schicht des ersten Substrats umfasst, welche die Abtastelektrode (16; 270, 280) bedeckt;
wobei das Bilden des zweiten Substrats (200) den Schritt des Bildens einer zweiten Flüssigkristallausrichtungsschicht (160) als oberste Schicht des zweiten Substrats (200) umfasst, welche den Berührungsabstandshalter (14; 141) bedeckt;
**dadurch gekennzeichnet, dass** der Abschnitt der zweiten Flüssigkristallausrichtungsschicht (160) auf der Oberseite des Berührungsabstandshalters (14; 141) eine dünnere Dicke als der restliche Abschnitt der zweiten Flüssigkristallausrichtungsschicht (160) aufweist.

11. Verfahren nach Anspruch 10, wobei der Berührungsabstandshalter (14; 141) ein leitendes Material aufweist.

12. Verfahren nach Anspruch 11, wobei der Berührungsabstandshalter (14; 141) ein transparentes leitendes Material aufweist.

13. Verfahren nach einem der Ansprüche 10, wobei sich eine Seitenwand der Abtastelektrode (16; 270, 280) neigt.

## Revendications

1. Un panneau d'affichage à cristaux liquides comprenant:
un premier substrat (200) incluant une électrode de détection (16; 270, 280);
un deuxième substrat (100) à l'opposé du premier substrat (200) incluant un espaceur tactile (14; 141);
un espaceur de colonne (13) soutenant le premier et le deuxième substrat (200; 100); et
une couche à cristaux liquides (17; 300) interposée entre le premier et le deuxième substrat (200; 100);
où l'électrode de détection (16; 270, 280) faisant face à l'espaceur tactile (14; 141) a une surface concave;
le premier substrat (200) incluant comme couche supérieure une première couche d'alignement de cristaux liquides (290) couvrant l'électrode de détection (16; 270, 280);
le deuxième substrat (100) incluant comme couche supérieure une deuxième couche d'alignement de cristaux liquides (160) couvrant l'espaceur tactile (14; 141);
**caractérisé en ce que** la portion de la deuxième couche d'alignement de cristaux liquides (160) sur le dessus de l'espaceur tactile (14; 141) possède une épaisseur plus fine que la portion restante de la deuxième couche d'alignement de cristaux liquides (160).

2. Le panneau d'affichage à cristaux liquides de la revendication 1, où l'espaceur tactile (14; 141) possède un matériau conducteur.

3. Le panneau d'affichage à cristaux liquides de la revendication 2, où l'espaceur tactile (14; 141) possède un matériau conducteur transparent.

4. Le panneau d'affichage à cristaux liquides de l'une des revendications 1 à 3, où une paroi latérale de l'électrode de détection (16; 270, 280) est inclinée.

5. Le panneau d'affichage à cristaux liquides de l'une des revendications là 3, où le premier substrat (200) inclut un transistor à couches minces (TFT) pour entraîner un pixel et;
où le deuxième substrat (100) inclut une couche de matrice à fond noir (110).

6. Le panneau d'affichage à cristaux liquides de la revendication 5, où le transistor à couches minces (TFT) inclut:
une électrode grille (211);
une couche d'isolation de grille (220) sur l'électrode grille (211);
une couche active (231) sur la couche d'isolation de grille (220);
une couche de contact ohmique (233) sur la couche active (231);
une électrode source et une électrode déversoir (241, 243) sur la couche de contact ohmique (233);
un film de passivation (250) ayant un orifice de contact (251); et
une électrode à pixel (260) contactant l'électrode déversoir (243) au travers de l'orifice de contact (251), où l'électrode à pixel (260) et
l'électrode de détection (16; 270, 280) sont fabriquées avec principalement le même matériau que la même couche.

7. Le panneau d'affichage à cristaux liquides de la revendication 6, où le film de passivation (250) possède une surface concave sous l'électrode de détection (16; 270, 280).

8. Le panneau d'affichage à cristaux liquides de la revendication 7 comprend de plus une première ligne de détection (215) et une deuxième ligne de détection (245) électriquement connectées à l'électrode de détection (16; 270, 280).

9. Le panneau d'affichage à cristaux liquides de la revendication 8, au moins l'une de la première ligne de détection (215), la deuxième ligne de détection (245), la couche d'isolation de grille (220) ou le film de passivation (250) fabrique la surface concave pour l'électrode de détection (16; 270, 280).

10. Une méthode de fabrication d'un panneau d'affichage à cristaux liquides comprenant :
la formation d'un premier substrat (100) incluant l'étape de formation d'un espaceur tactile (14; 141) sur un substrat (101);
la formation d'un deuxième substrat (200) incluant l'étape de formation d'une électrode de détection (16; 270, 280) sur un autre substrat (201) où l'électrode de détection (16; 270, 280) est formée de façon à avoir une surface concave;
l'assemblage du premier et du deuxième substrat (100, 200) incluant l'étape de formation d'un espaceur de colonne (13) soutenant le premier et le deuxième substrat (100, 200) de sorte que l'électrode de détection (16; 270, 280) soit face à l'espaceur tactile (14, 141); et
l'interposition d'une couche de cristaux liquides (17 ; 300) entre le premier et le deuxième substrat (100 , 200);
où la formation du premier substrat (100) inclut l'étape de formation d'une première couche d'alignement de cristaux liquides (290) comme la couche supérieure du premier substrat (100) couvrant l'électrode de détection (16; 270, 280);
où la formation du deuxième substrat (200) inclut l'étape de formation d'une deuxième couche d'alignement de cristaux liquides (160) comme la couche supérieure du deuxième substrat (200) couvrant l'espaceur tactile (14; 141);
**caractérisé en ce que** la portion de la deuxième couche d'alignement de cristaux liquides (160) sur le dessus de l'espaceur tactile (14; 141) possède une épaisseur plus fine que la portion restante de la deuxième couche d'alignement de cristaux liquides (160).

11. La méthode de la revendication 10, où l'espaceur tactile (14; 141) possède un matériau conducteur.

12. La méthode de la revendication 11, où l'espaceur tactile (14; 141) possède un matériau conducteur transparent.

13. La méthode de la revendication 10, où une paroi latérale de l'électrode de détection (16; 270, 280) est inclinée.
